(19) Europäisches Patentamt
European Patent Office
Office européen des brevets

(11) **EP 4 344 554 B1**

(12) **EUROPEAN PATENT SPECIFICATION**

(45) Date of publication and mention
of the grant of the patent:
**22.04.2026 Bulletin 2026/17**

(21) Application number: **23198199.4**

(22) Date of filing: **19.09.2023**

(51) International Patent Classification (IPC):
*A23L 2/10* (2006.01)      *A23L 2/385* (2006.01)
*A23L 5/00* (2016.01)      *A23L 7/10* (2016.01)
*A23L 7/104* (2016.01)      *A23L 11/00* (2025.01)
*A23L 19/00* (2016.01)

(52) Cooperative Patent Classification (CPC):
(C-Sets available)
**A23L 19/09; A23L 2/10; A23L 2/385; A23L 5/51;
A23L 7/10; A23L 7/107; A23L 11/01;** A23V 2002/00
(Cont.)

(54) **RE-USE OF EVAPORATED PRODUCT IN THE PREPARATION OF PLANT-BASED LIQUID FOOD CONCENTRATE**

WIEDERVERWENDUNG VON VERDAMPFTEM PRODUKT BEI DER HERSTELLUNG VON FLÜSSIGEM NAHRUNGSMITTELKONZENTRAT AUF PFLANZLICHER BASIS

RÉUTILISATION DE PRODUIT ÉVAPORÉ DANS LA PRÉPARATION D'UN CONCENTRÉ ALIMENTAIRE LIQUIDE À BASE DE PLANTES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **27.09.2022 EP 22198047**

(43) Date of publication of application:
**03.04.2024 Bulletin 2024/14**

(73) Proprietor: **Tetra Laval Holdings & Finance S.A.
1009 Pully (CH)**

(72) Inventor: **Funkquist, Ola
22186 Lund (SE)**

(74) Representative: **Tetra Pak Patent Attorneys
AB Tetra Pak
Patent Department
Ruben Rausings gata
221 86 Lund (SE)**

(56) References cited:
WO-A1-2021/193985       CN-A- 112 314 815
FR-A- 1 403 662          US-A1- 2006 246 201
US-A1- 2015 136 333

EP 4 344 554 B1

(52) Cooperative Patent Classification (CPC): (Cont.)

C-Sets
A23V 2002/00, A23V 2200/262, A23V 2300/10,
A23V 2300/24, A23V 2300/50

**Description**

Technical Field

The invention relates to a process and system for producing a plant-based concentrated liquid food product.

Background Art

Plant-based liquid food products are growing in popularity in recent years. To enhance the shelf-life of such products, to reduce shipment costs and/or to provide an ingredient (base) to be used in a plant based beverage, it is common to produce plant-based liquid foods in a concentrated or condensed form, such as condensed oat milk, condensed rice milk, or the like. The processing of concentrated plant-based liquid food products typically involves preparing a plant-based slurry mixture by mixing dry plant-based ingredients and water, and then evaporating water from the mixture to produce the concentrated liquid food product. Although this conventional process for producing concentrated plant-based liquid food products is easy and relatively efficient, there is still a need for making it even more efficient, in particular to reduce cost.

Related prior art is described in patent documents CN112314815A and US2015/136333A1.

Summary

It is an object of the invention to at least partly overcome one or more of the above-identified limitations of the prior art. In particular, it is an object to provide a process and system that use less resources for producing a plant-based concentrated liquid food product.

To solve at least these objects, a method is provided for producing a plant-based concentrated liquid food product, including the steps of: (i) preparing a plant-based slurry by mixing at least plant material and water; (ii) treating the slurry with at least one of enzymes and heat; (iii) separating the slurry into a solid portion and a liquid portion; (iv) evaporating water from the liquid portion, to produce at least one evaporated portion that comprises evaporated water, and at least one concentrated portion which forms the plant-based concentrated liquid food product; (v) preparing a subsequent plant-based slurry by mixing at least plant material and the evaporated portion; and (vi) repeating steps ii) to iv) for the subsequent slurry.

The method comprises filtering the evaporated portion with a filter, prior to the preparing of the subsequent plant-based slurry.

A system also is provided for producing a plant-based concentrated liquid food product, including: (i) a mixer configured to prepare a plant-based slurry by mixing at least plant material and water; (ii) a container enabling the slurry to be treated with at least one of enzymes and heat; (iii) a separation unit configured to separate the slurry into a solid portion) and a liquid portion; (iv) an evaporator configured to evaporate water from the liquid portion, to produce at least one evaporated portion that comprises evaporated water, and at least one concentrated portion which forms the plant-based concentrated liquid food product; (v) a return conduit configured to convey the evaporated portion from the evaporator to the mixer or to another mixer which is configured to prepare a subsequent plant-based slurry by mixing at least plant material and the evaporated portion; (vi) a filter for filtering the evaporated portion, prior to the preparing of the subsequent plant-based slurry.

Such a system and method are advantageous in that a significant portion of the evaporated product may be recycled and re-used in the subsequent slurry mixture, such as 85% or more of the evaporated product being re-used. The evaporated product may predominantly be made of water, and may be condensed into liquid form before being added back into the subsequent plant-based slurry mixture. This significant portion of recycled evaporated product re-used in the subsequent slurry mixture displaces the amount of fresh water used to produce the slurry mixture, thereby resulting in significant water savings.

Advantageously, the process and system also may provide significant energy savings by using the heat from the recycled evaporated product to heat the slurry mixture. This reduces the amount of energy used to heat fresh water that is added to the slurry mixture.

The recycled evaporated product is filtered prior to being re-used in the subsequent slurry mixture, such as to remove contaminants or other constituents that could affect the quality or taste of the subsequent slurry mixture. The recycled evaporated product may be cooled prior to filtering to reduce the possibility of damage to the filter, and the heat extracted from the recycled evaporated product during cooling may be used to reheat the liquid that is added to the subsequent slurry mixture, thus still resulting in energy savings.

Still other objectives, features, aspects and advantages of the invention will appear from the following detailed description as well as from the drawings.

Brief Description of the Drawings

Embodiments of the invention will now be described, by way of example, with reference to the accompanying schematic drawings, in which

Fig. 1 is a schematic view of an exemplary system for producing a plant-based concentrated liquid food product according to an embodiment of the invention.
Fig. 2 is a flow chart showing an exemplary method of producing a plant-based concentrated liquid food product according to an embodiment of the invention.

Detailed Description

Embodiments of the invention will now be described more fully hereinafter with reference to the accompanying drawings, in which some, but not all, embodiments of the invention are shown. The invention should not be construed as limited to the embodiments set forth herein.

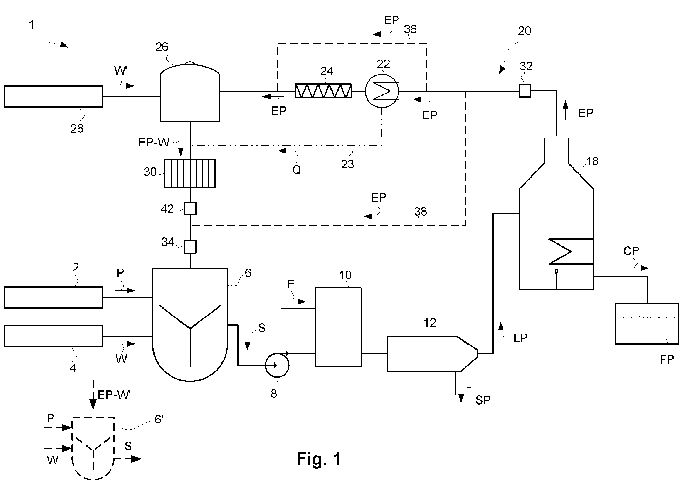

With reference to Fig. 1 an exemplary system 1 for producing a plant-based concentrated liquid food product FP is illustrated, in which the system 1 generally uses plant-based material P and water W to form a slurry S. The slurry S is separated into a solid portion SP and a liquid portion LP, where the liquid portion LP is subjected to evaporation to generate a concentrated portion CP which forms the plant-based concentrated liquid food product FP form, and an evaporated portion EP that includes evaporated water. The system 1 is configured such that the evaporated portion EP with the water is recycled and re-used in a subsequent plant-based slurry mixture, thereby significantly reducing the amount of fresh water used to make the subsequent slurry. The evaporated water may be returned at an elevated temperature, thereby reducing the amount of energy used to heat the water for making the slurry mixture. The system 1 also may be configured to provide energy savings by recuperating heat from the process to heat the water or the slurry mixture.

The system 1 includes at least one mixer 6 that receives the plant-based material P and water W, and mixes them together to form the slurry mixture S. The slurry S is a mixture of solids from the plant-based material P, which is suspended in liquid, including the water W. The mixer 6 may be a grinder, a blender, a high-shear mixer, or the like, or may have any suitable combination of such mixing techniques for forming the slurry mixture S with its desired properties.

The plant-based material P may be added to the mixer 6 from a container 2, such as a hopper, which may be adapted for conveying dry goods. The plant-based material P may include any suitable type of food or combination of foods for making the plant-based concentrated liquid food product FP. This includes, but is not limited to, one or more of oat, pea, soy, rice, beans or the like. The plant-based material P may be in any suitable form for mixing in the mixer 6, such as a dry good in the form of flour, flake, kernel, groat, seed, grains, pea, bean, nut, or the like, or any combination thereof. Additional ingredients may also be added to the mixer 6 to form the slurry S as may be desired to facilitate processing, taste, nutritional composition or other properties of the final food product FP.

The water W may be added from a separate container or other source 4, such as a municipal water source. The water W is added to the mixer 6 as a liquid and may be heated prior to entering the mixer 6. Alternatively or additionally, the slurry S may be heated in the mixer 6, such as with a heater in thermal communication with the mixer 6. The temperature of the water W or the slurry S in the mixer 6 may be in a range from 55 °C to 95 °C. The amount of water W added to the mixer 6 depends on the desired properties of the slurry S. For example, the slurry S may have a solids content in a range from e.g. 10% to 35%, or 16% to 20% by weight, or more, such that the amount of water W added to the mixer 6 may be in a range from 65% to 90% by weight, or less.

To convey material through the system 1, one or more flow control devices may be provided. For example, the illustrated system 1 shows a pump 8 located downstream of the mixer 6, which is used to convey the slurry S downstream in the system 1. More than one pump 8 may be employed at various locations in the system depending on the state of the material to be conveyed. In addition, one or more valves (not shown), or other similar flow control devices, may be utilized at various locations throughout the system 1 to control the flow of material as desired.

At least one container 10 may be located downstream of the mixer 6 for receiving the slurry S and enabling the slurry S to be treated with enzymes E and/or with heat. That is, the slurry S may be either treated with enzymes, heat, or both. Heat treatment may be done by supplying heat to the container 10, for example by using a heating jacket that surrounds the container 10. The enzymes E may, if used, hydrolyze the plant-based material in the slurry S to cut starch and create sugars. Following this process, the enzymes may be deactivated, either in the container 10 or in a separate container downstream of container 10. Although enzymes E are shown as being added to the container 10, the enzymes E also could be added directly to the mixer 6, in which case the container 10 may be used for subsequent processing such as deactivation. The treatment with enzymes and/or heat is performed according to known techniques commonly employed for the type of plant material that is used to form the slurry.

A separation unit 12 is located downstream of the mixer 6 to receive the slurry mixture S, or the enzyme-treated slurry mixture from the container 10. The separation unit 12 may be a decanter or other suitable device that is configured to separate the slurry S into a solid portion SP and a liquid portion LP to achieve a liquid base with a predetermined solid matter content. As such, the terms solid portion and liquid portion are used herein to differentiate the portions from each other, where the solid portion SP contains more solids than the liquid portion LP. It is understood that the solid portion SP may still contain some liquid, while the liquid portion LP may still contain some solids. The solid portion SP may be referred to as a first portion and the liquid portion LP may be referred to as a second portion, where the difference is that the first portion comprises more solids than the second portion. For example, the solid (first) portion SP may have at least five times more solids than the liquid (second) portion. The solid matter content of the liquid portion LP generally will vary depending on the solid matter in the initial slurry S and the upstream processes. For example, the solid matter content in the liquid portion LP may be in a range from 2% to 35% by weight, or more particularly in a range from 10% to 30% by weight. Generally, the liquid portion LP has about 2% less solids than the slurry S. The solid portion SP may have a solid content of about 30% to 45%.

An evaporator 18 is located downstream of the separation unit 12 and is configured to receive and evaporate at least part of the liquid portion LP to produce at least one evaporated portion EP and at least one concentrated portion CP. The evaporated portion EP includes evaporated water, in which this water is derived from the water W in the initial slurry mixture S. The evaporated portion EP may include greater than 97% water, or greater than 99% water, although other volatiles or molecules from the liquid portion LP may be contained in the evaporated portion EP. The concentrated portion CP from the evaporator 18 forms the plant-based concentrated liquid food product FP. The concentrated portion CP that is used to make the final plant-based concentrated liquid food product FP may have a solids content in a range from 40% to 80% by weight, or could be up to 85% solids by weight, or more.

The amount of water evaporated from the liquid portion LP may be in a range from 90% to 95% by weight, or more, such that a substantial amount of water from the initial slurry mixture S may be recycled back to the mixer 6, or one or more other mixer(s) 6', for re-use in preparing at least one subsequent slurry S. In addition, the evaporated water in the evaporated portion EP may exit the evaporator 18 at an elevated temperature, such as in a range from 70 °C to 80 °C or even more, in which this heated water may be used to provide heat in making the slurry S, resulting in significant energy savings.

To return and re-use the evaporated water from the evaporated portion EP, a return path, such as a suitable return conduit 20, is fluidly connected to an output of the evaporator 18 for conveying the water in the evaporated portion EP to the mixer(s) 6, 6'. The return conduit 20 may contain any number of additional processing devices that are suitable for the system 1, such as flow control devices, meters, branches, or the like. In addition, the return conduit 20 may convey the evaporated portion EP in vapor or liquid form. As such, it is understood that the term evaporated portion is used herein to differentiate from the condensed portion, and that after evaporation, the evaporated portion EP, including the evaporated water, may be condensed into liquid form prior to being returned to the mixer(s) 6, 6'. For this purpose the evaporator 18 typically may have a condenser at its outlet for the evaporated portion EP.

As shown in the illustration, there are various ways in which the water in the evaporated portion EP may be returned and re-used in the mixer(s) 6, 6'. For example, as shown via branched fluid return line 38, after exiting the evaporator 18, the evaporated portion EP may be returned directly to an input of the mixer 6 (or other mixer 6') without further processing by other components of the system 1. To provide a proper mass balance of the evaporated water in the subsequent slurry S, the system 1 also may include at least one flow meter 32, such as a mass flow or volumetric flow meter, arranged between the evaporator 18 and the mixer 6. In addition, to control the heat of the slurry mixture S, the system 1 also may include at least one temperature sensor 34 upstream of the mixer 6 to determine the heat of the recycled water being added to the mixer 6.

In some cases, the evaporated portion EP may include unwanted flavors, volatiles, or other impurities. According to the present invention, the evaporated portion EP is filtered to remove such impurities using a suitable filter 24. The filter 24 may include a reverse osmosis filter, which provides a high degree of filtration. Before reverse osmosis filtration, a pre-filter, such as a 25-micron needle filter bag, also could be used to prolong the life of the reverse osmosis filter. Because some types of filters may degrade at elevated temperatures, such as at the temperature of the evaporated product EP, the system 1 also may include a cooler 22 upstream of the filter 24. The cooler 22 may include a suitable heat exchanger that is configured to reduce the temperature of the evaporated portion EP prior to filtration by a desired amount, such as to a temperature of about 50 °C or lower, for example. To preserve the heat energy Q extracted from the evaporated portion EP for re-use, a thermal communication line 23 may be thermally coupled to the cooler 22 and configured to transmit the extracted heat energy Q back into the recycled water prior to entering the mixer 6. In other situations where flavors, volatiles, impurities or other molecules from the evaporated portion EP may be desired in the subsequent slurry S, the system 1 may include a bypass line 36 that bypasses the filter 24.

A buffering tank 26 may be provided in the system 1 for receiving the evaporated portion EP, either from the filter 24 or via the bypass line 36, to help delink the input/output capacity of the system 1. The buffering tank 26 also may be configured to receive fresh water W from a source 28 (e.g., a container or municipal source) to mix with the water from the evaporated portion EP to form a water mixture EP-W' that is added to the mixer(s) 6, 6' for preparing the subsequent slurry S. The fresh water portion W' of the mixture EP-W may at least partially compensate for the total water required for the subsequent slurry mixture S. For example, the addition of the fresh water W' into the mixture EP-W may make up the entire balance of required water content in the slurry S, in which case no additional water is needed from the source 4. Alternatively, additional water W may be added from the initial source 4. Although shown with initial source 4, the system 1 also could use only the water W from the source 28 (via buffer tank 26) for the initial slurry mixture S, in which case the source 4 would not be required at all.

Because the added fresh water W from the source 28 may be cooler than the desired temperature for preparing the slurry S, a heater 30 may be located downstream of the buffer tank 26 for heating the water mixture EP-W' prior to being added to the mixer(s) 6, 6'. The heater 30 may heat the water mixture EP-W to a temperature in a range from 55 °C to 85 °C, for example. As noted above, heat Q from the cooler 22 (if used) may be added to the mixture EP-W to reduce the amount of heat required by the heater 30 to bring the mixture EP-W up to the desired temperature.

A flow meter 42 may be located between the buffering tank 26 and the mixer 6 to determine the mass balance of the water mixture EP-W' to be added to mixer 6 for preparing the subsequent slurry S. The flow meter 42 may cooperate with suitable flow control devices (e.g., valves) or suitable control circuitry (e.g., an electronic controller) to determine and meter the amount of water mixture EP-W for adding to the mixer 6 to achieve the desired total water content of the slurry S. The flow meter 42 also may cooperate with the flow meter 32 between the evaporator 18 and buffering tank 26 for determining input and output of water from the tank 26, which may help to determine the amount of fresh water W to be added to the tank 26. In addition, the temperature sensor 34 also may be used to control the quantity of fresh water W in the mixture EP-W or to control the heater 30 to achieve the desired temperature of the slurry S.

The system 1 is shown as a continuous loop process in which an evaporated portion EP is continuously produced from a liquid portion LP of a slurry S and returned to the mixer 6, or another mixer 6', for producing a subsequent slurry S. As such, the subsequent slurry will include at least some water from the evaporated portion EP, which this evaporated water portion is then evaporated and cycled back into further subsequent mixture. With the addition of fresh water W' or W, this process may run for several hours or days, depending on the need to clean machinery, replenish raw material, or the like. In addition, because evaporated water is continuously cycled, and re-evaporated, there may be concentration build-ups of undesirable impurities which may be filtered with the filter 24, or which may require a flush of the system by using fresh water W or W' or dedicated cleaning agents. Although shown as a continuous process, it is understood that the system 1 also may be used as a semi-continuous process or a batch process while still providing advantages in water savings. For example, the water in the evaporated portion EP may be stored in separate containers following evaporation, and may then be used as the entirety of the water content in one or more subsequent slurry mixtures S, such as by filling the source (container) 4 with the evaporated water from the evaporated portion EP. Other variations of using the water from the evaporated portion EP also are possible with the exemplary system.

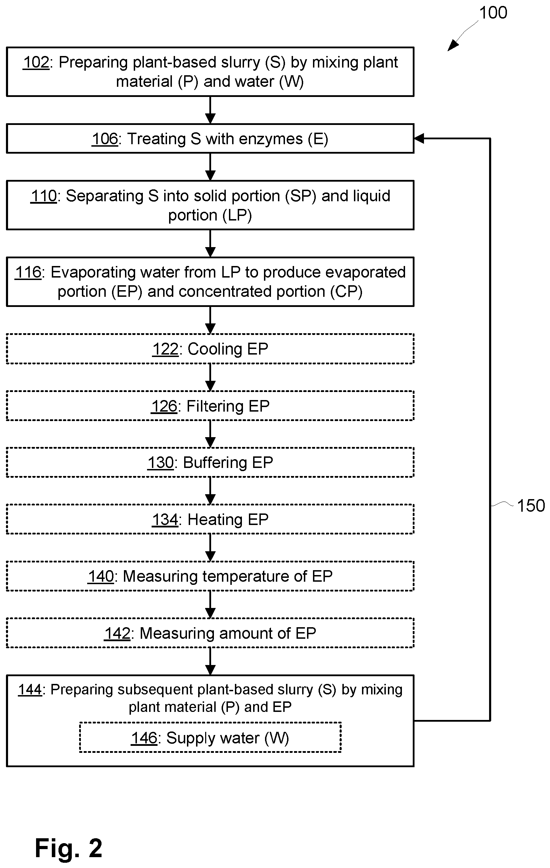

Turning to Fig. 2, a flow chart of an exemplary method 100 for producing a plant-based concentrated liquid food product FP using recycled water is shown. The method 100 may begin with a step of preparing 102 a plant-based slurry S by mixing at least plant material P and water W. The slurry S may be prepared at an elevated temperature, such as by heating the water W or heating the slurry S. The temperature may be in a range from 55 °C to 85 °C, which may depend on the plant-based material P. For example, an oat-based slurry may be processed in a temperature range from 55 °C to 75 °C, and a rice-based slurry may be processed at a temperature of about 85 °C.

At step 106, the slurry S may be treated with enzymes E, which may hydrolyze the plant material P. The enzyme treatment may occur over a time span of 2, 4, 6, or even up to 15 hours. Generally, the amount of enzyme added may be less than 1% by weight of the total slurry. Following enzyme treatment, the enzymes may be deactivated. Alternatively or additionally, in step 106 the slurry S may be treated with heat, as appropriate in view of what type of plant-based concentrated liquid food product is prepared.

Step 110 includes separating the slurry S into a solid portion SP and a liquid portion LP, of which the solid portion SP may include fibrous material separated from the plant-based material P. The solids content in the liquid portion LP may be in a range from 10% to 30% by weight, for example, with a balance being the water from the slurry mixture S.

Step 116 includes evaporating water from the liquid portion LP to produce an evaporated portion EP and a concentrated portion CP. About 80% to 95%, or more, of the water in the liquid portion LP may be evaporated to be included with the evaporated portion EP. The temperature of this evaporated water may be in a range from 70 °C to 90 °C. About 99% or more of the evaporated portion EP may be evaporated water, with a balance being impurities, such as volatiles from the solid portion or other molecules. The

At step 116, a significant amount of the water content in the liquid portion LP is evaporated which may be re-used for the subsequent slurry S. Two theoretical mass balance examples are provided below to demonstrate the amount of water that may be removed and re-used during this process, of which these examples are for illustration and not limitation:

Example 1:

An amount of 20,000 kg/h of the liquid portion LP of an oat-based slurry S having a solids content of 15% by weight is fed to an evaporator to form an evaporated portion EP and a condensed portion CP, in which the condensed portion CP has a solids content of 75% by weight. This means that 16,000kg/h of water (or 94% of the water) is removed from the liquid portion LP, which may be recycled and re-used in a subsequent slurry mixture. Table 1 below illustrates this example:

Table 1: Mass balance calculation for Example 1

| Input (kg/h) | | Output (kg/h) | |
|---|---|---|---|
| Solids (Oat) | 3,000 | Solids (Oat) | 3,000 |
| Water | 17,000 | Water | 1,000 |
| Total | 20,000 | Total | 4,000 |
| Solids content | 15% | Solids content | 75% |

Example 2:

An amount of 20,000 kg/h of the liquid portion LP of an oat-based slurry S having a solids content of 25% by weight is added to an evaporator to form an evaporated portion EP and a condensed portion CP, in which the condensed portion CP has a solids content of 75% by weight. This means that 13,350 kg/h of water (or 89% of the water) is removed from the liquid portion LP, which may be recycled and re-used in a subsequent slurry mixture. Table 2 below illustrates this example:

Table 2: Mass balance calculation for Example 2

| Input (kg/h) | | Output (kg/h) | |
|---|---|---|---|
| Solids (Oat) | 5,000 | Solids (Oat) | 5,000 |
| Water | 15,000 | Water | 1,650 |
| Total | 20,000 | Total | 6,650 |
| Solids content | 25% | Solids content | 75% |

As noted above, the solids content of the input liquid portion LP may be in a range from 10% to 30%, but could be 2% to 35%. The solids content of the output condensed portion CP used to make the final food product FP may be in a range from 70% to 85%, but could be 60% to 95%. Such ranges could be used in the examples above to identify the significant water savings available when using the exemplary method 100.

Following step 116, the method 100 may include cooling the evaporated product EP at step 122. The cooling step 122 may reduce the temperature of the evaporated product to a level that does not degrade the filter or other downstream components of the system. Step 126 may include filtering the evaporated product to remove impurities.

Step 130 includes buffering the evaporated product EP, which may include mixing the evaporated product EP with fresh water W in a tank. Following the buffering step 130, the process may include a heating step 134 to raise the temperature of the evaporated product EP, or the evaporated product and fresh water mixture EP-W.

At various times, such as after the heating step 134, the method 100 may include a step 140 of measuring the temperature of the evaporated portion EP or the temperature of a mixture EP-W' which the evaporation portion EP is part of, prior to a step 144 of preparing of the subsequent plant-based slurry (S). In addition, the method 100 may include, at various times, a step 142 of measuring an amount of the evaporated portion EP prior to the preparing 144 of the subsequent plant-based slurry S. These steps 140 or 142 may be used for mass balance of the water content in preparing 144 the subsequent slurry S, or may be used to provide a predetermined slurry S temperature.

Step 144 includes preparing the subsequent plant-based slurry S by mixing plant material P and the evaporated portion EP. During this step, additional water W may be supplied at step 146, in which the additional supplied water W is mixed with plant material P and the evaporated portion EP of the subsequent slurry S. The subsequent plant-based slurry S may include an amount of water of which at least 75% comes from the evaporated portion EP. In addition, the heat from the evaporated product EP may be used to heat the slurry S. For example, the evaporated portion EP may have an initial temperature of at least 80 °C, and the preparing 144 of the subsequent plant-based slurry S may be performed before the thermal energy of the evaporated portion EP has been reduced by an amount that corresponds to a temperature decrease greater than 30 °C. This may be determined using Equation (1):

$$Q = m*c*\Delta T \text{ (Equation 1)}$$

where:

Q is the thermal energy (J)
m is the mass (kg)
c is the specific heat (J/kg/°C), and
ΔT is the change in temperature (°C).

At step 150, the steps 106 to 144 may be repeated for one or more subsequent slurry mixtures S. The method 100 may be a continuous process that is repeated continuously for a period of time, such as 20 hour runs in which the time from slurry S production to evaporated product EP may be about 3.5 hours.

From the description above follows that, although various embodiments of the invention have been described and shown, the invention is not restricted thereto, but may also be embodied in other ways within the scope of the subject-matter defined in the following claims.

**Claims**

1. A method (100) for producing a plant-based concentrated liquid food product (FP), the method comprising the steps of:

   i) preparing (102) a plant-based slurry (S) by mixing at least plant material (P) and water (W);
   ii) treating (106) the slurry (S) with at least one of enzymes (E) and heat;
   iii) separating (110) the slurry (S) into a solid portion (SP) and a liquid portion (LP);
   iv) evaporating (116) water from the liquid portion (LP), to produce at least at least one evaporated portion (EP) that comprises evaporated water, and at least one concentrated portion (CP) which forms the plant-based concentrated liquid food product (FP);
   v) preparing (144) a subsequent plant-based slurry (S) by mixing at least plant material (P) and the evaporated portion (EP); and
   vi) repeating (150) steps ii) to iv) for the subsequent slurry (S). (S),

   **characterized in that**
   the method (100) comprises filtering (126) the evaporated portion (EP) with a filter (24), prior to the preparing (144) of the subsequent plant-based slurry (S).

2. The method according to claim 1, comprising cooling (122) the evaporated portion (EP) with a cooler (22), prior to the filtering (126) of the evaporated portion (EP).

3. The method according to any preceding claim, comprising buffering (130) the evaporated portion (EP) in a tank (26), prior to the preparing (144) of the subsequent plant-based slurry (S).

4. The method according to any preceding claim, comprising heating (134) the evaporated portion (EP) with a heater (30), prior to the preparing (144) of the subsequent plant-based slurry (S).

5. The method according to any preceding claim, wherein the mixing in steps i) and v) is performed in the same mixer (6).

6. The method according to any preceding claim, comprising measuring (140) the temperature of the evaporated portion (EP) or the temperature of a mixture (EP-W') which the evaporation portion (EP) is part of, prior to the preparing (144) of the subsequent plant-based slurry (S).

7. The method according to any preceding claim, comprising measuring (142) the amount of the evaporated portion (EP), prior to the preparing (144) of the subsequent plant-based slurry (S).

8. The method according to any preceding claim, wherein the preparing (144) of the subsequent plant-based slurry (S) comprises supplying (146) water (W) and mixing the supplied water (W) with the plant material (P) and the evaporated portion (EP).

9. The method according to any preceding claim, wherein the subsequent plant-based slurry (S) comprises an amount of water of which at least 75% comes from the evaporated portion (EP).

10. The method according to any preceding claim, wherein the evaporated portion (EP) has an initial temperature of at least 80 °C, and the preparing (144) of the subsequent plant-based slurry (S) is performed before the thermal energy of the evaporated portion (EP) has been reduced by an amount that corresponds to a temperature decrease greater than 30 °C.

11. The method according to any preceding claim, wherein the method (100) is a continuous process that is repeated continuously for a period of time.

12. A system (1) for producing a plant-based concentrated liquid food product (FP), the system comprising

    i) a mixer (6) configured to prepare a plant-based slurry (S) by mixing at least plant material (P) and water (W);
    ii) a container (10) enabling the slurry (S) to be treated with at least one of enzymes (E) and heat;
    iii) a separation unit (12) configured to separate the slurry (S) into a solid portion (SP) and a liquid portion (LP);
    iv) an evaporator (18) configured to evaporate water from the liquid portion (LP), to produce at least one evaporated portion (EP) that comprises evaporated water, and at least one concentrated portion (CP) which forms the plant-based concentrated liquid food product (FP);
    v) a return conduit (20) configured to convey the evaporated portion (EP) from the evaporator (18) to the mixer (6) or to another mixer (6') which is configured to prepare a subsequent plant-based slurry (S) by mixing at least plant material (P) and the evaporated portion (EP);

    **characterized by**
    (vi) a filter (24) for filtering the evaporated portion (EP), prior to the preparing (144) of the subsequent plant-based slurry (S).

13. The system according to claim 12, wherein the return conduit (20) comprises a temperature sensor (34) configured to measure a temperature of the evaporated portion (EP) or the temperature of a mixture (EP-W') which the evaporation portion (EP) is part of.

14. The system according to claim 12 or 13, wherein the return conduit (20) comprises a meter (32) configured to measure the amount of the evaporated portion (EP) or measure the amount of a mixture (EP-W') which the evaporation portion (EP) is part of.


**Patentansprüche**

1. Verfahren (100) zur Herstellung eines konzentrierten flüssigen Lebensmittelprodukts auf pflanzlicher Basis (FP), wobei das Verfahren die Schritte umfasst:

    i) Herstellen (102) einer Aufschlämmung auf pflanzlicher Basis (S) durch Mischen von wenigstens Pflanzenmaterial (P) und Wasser (W);
    ii) Behandeln (106) der Aufschlämmung (S) mit wenigstens einem von Enzymen (E) und Wärme;
    iii) Trennen (110) der Aufschlämmung (S) in einen festen Teil (SP) und einen flüssigen Teil (LP);
    iv) Verdampfen (116) von Wasser aus dem flüssigen Teil (LP), um wenigstens einen verdampften Teil (EP), der verdampftes Wasser umfasst, und wenigstens einen konzentrierten Teil (CP), der das konzentrierte flüssige Lebensmittelprodukt auf pflanzlicher Basis (FP) bildet, zu erzeugen;
    v) Herstellen (144) einer nachfolgenden Aufschlämmung auf pflanzlicher Basis (S) durch Mischen von wenigstens Pflanzenmaterial (P) und dem verdampften Teil (EP); und
    vi) Wiederholen (150) der Schritte ii) bis iv) für die nachfolgende Aufschlämmung (S), (S),

    **dadurch gekennzeichnet, dass**
    das Verfahren (100) Filtrieren (126) des verdampften Teils (EP) mit einem Filter (24) vor dem Herstellen (144) der nachfolgenden Aufschlämmung auf pflanzlicher Basis (S) umfasst.

2. Verfahren nach Anspruch 1, umfassend Kühlen (122) des verdampften Teils (EP) mit einem Kühler (22) vor dem Filtrieren (126) des verdampften Teils (EP).

3. Verfahren nach einem der vorstehenden Ansprüche, umfassend Puffern (130) des verdampften Teils (EP) in einem Tank (26) vor dem Herstellen (144) der nachfolgenden Aufschlämmung auf pflanzlicher Basis (S).

4. Verfahren nach einem der vorstehenden Ansprüche, umfassend Erhitzen (134) des verdampften Teils (EP) mit einer Heizvorrichtung (30) vor dem Herstellen (144) der nachfolgenden Aufschlämmung auf pflanzlicher Basis (S).

5. Verfahren nach einem der vorstehenden Ansprüche, wobei das Mischen bei den Schritten i) und v) in dem gleichen Mischer (6) durchgeführt wird.

6. Verfahren nach einem der vorstehenden Ansprüche, umfassend Messen (140) der Temperatur des verdampften Teils (EP) oder der Temperatur eines Gemischs (EP-W'), zu dem der verdampfte Teil (EP) gehört, vor dem Herstellen (144) der nachfolgenden Aufschlämmung auf pflanzlicher Basis (S).

7. Verfahren nach einem der vorstehenden Ansprüche, umfassend Messen (142) der Menge des verdampften Teils (EP) vor dem Herstellen (144) der nachfolgenden Aufschlämmung auf pflanzlicher Basis (S).

8. Verfahren nach einem der vorstehenden Ansprüche, wobei das Herstellen (144) der nachfolgenden Aufschlämmung auf pflanzlicher Basis (S) Zuführen (146) von Wasser (W) und Mischen des zugeführten Wassers (W) mit dem Pflanzenmaterial (P) und dem verdampften Teil (EP) umfasst.

9. Verfahren nach einem der vorstehenden Ansprüche, wobei die nachfolgende Aufschlämmung auf pflanzlicher Basis (S) eine Menge an Wasser umfasst, von der wenigstens 75 % aus dem verdampften Teil (EP) stammen.

10. Verfahren nach einem der vorstehenden Ansprüche, wobei der verdampfte Teil (EP) eine Anfangstemperatur von wenigstens 80 °C aufweist und das Herstellen (144) der nachfolgenden Aufschlämmung auf pflanzlicher Basis (S) durchgeführt wird, bevor die Wärmeenergie des verdampften Teils (EP) um eine Menge verringert worden ist, der einer Temperaturabnahme von mehr als 30 °C entspricht.

11. Verfahren nach einem der vorstehenden Ansprüche, wobei das Verfahren (100) ein kontinuierliches Verfahren ist, das über einen Zeitraum kontinuierlich wiederholt wird.

12. System (1) zur Herstellung eines konzentrierten flüssigen Lebensmittelprodukts auf pflanzlicher Basis (FP), wobei das System umfasst

i) einen Mischer (6), gestaltet zur Herstellung einer Aufschlämmung auf pflanzlicher Basis (S) durch Mischen von wenigstens Pflanzenmaterial (P) und Wasser (W);
ii) einen Behälter (10), der es ermöglicht, die Aufschlämmung (S) mit wenigstens einem von Enzymen (E) und Wärme zu behandeln;
iii) eine Trenneinheit (12), gestaltet zum Auftrennen der Aufschlämmung (S) in einen festen Teil (SP) und einen flüssigen Teil (LP);
iv) einen Verdampfer (18), gestaltet zum Verdampfen von Wasser aus dem flüssigen Teil (LP), um wenigstens einen verdampften Teil (EP), der verdampftes Wasser umfasst, und wenigstens einen konzentrierten Teil (CP), der das konzentrierte flüssige Lebensmittelprodukt auf pflanzlicher Basis (FP) bildet, zu erzeugen;
v) eine Rückführleitung (20), gestaltet zum Befördern des verdampften Teils (EP) von dem Verdampfer (18) zu dem Mischer (6) oder zu einem anderen Mischer (6'), der dafür gestaltet ist, eine nachfolgende Aufschlämmung auf pflanzlicher Basis (S) durch Mischen von wenigstens Pflanzenmaterial (P) und dem verdampften Teil (EP) herzustellen;
**gekennzeichnet durch**
(vi) ein Filter (24) zum Filtrieren des verdampften Teils (EP) vor der Herstellung (144) der nachfolgenden Aufschlämmung auf pflanzlicher Basis (S).

13. System nach Anspruch 12, wobei die Rückführleitung (20) einen Temperatursensor (34) umfasst, gestaltet zum Messen einer Temperatur des verdampften Teils (EP) oder der Temperatur eines Gemischs (EP-W'), zu dem der verdampfte Teil (EP) gehört.

14. System nach Anspruch 12 oder 13, wobei die Rückführleitung (20) eine Messvorrichtung (32) umfasst, die dafür getstaltet ist, die Menge des verdampften Teils (EP) zu messen oder die Menge eines Gemischs (EP-W') zu messen, zu dem der verdampfte Teil (EP) gehört.

**Revendications**

1. Procédé (100) de production d'un produit alimentaire liquide concentré d'origine végétale (FP), le procédé comprenant les étapes de :

   i) préparation (102) d'une suspension d'origine végétale (S) par mélange d'au moins une matière végétale (P) et d'eau (W) ;
   ii) traitement (106) de la suspension (S) par au moins une des enzymes (E) et de la chaleur ;
   iii) séparation (110) de la suspension (S) en une partie solide (SP) et une partie liquide (LP) ;
   iv) évaporation (116) d'eau de la partie liquide (LP), pour produire au moins une partie évaporée (EP) qui comprend de l'eau évaporée, et au moins une partie concentrée (CP) qui forme le produit alimentaire liquide concentré d'origine végétale (FP) ;
   v) préparation (144) d'une suspension d'origine végétale subséquente (S) par mélange d'au moins une matière végétale (P) et de la partie évaporée (EP) ; et
   vi) répétition (150) des étapes ii) à iv) pour la suspension subséquente (S). (S),

   **caractérisée en ce que**
   le procédé (100) comprend une filtration (126) de la partie évaporée (EP) avec un filtre (24), avant la préparation (144) de la suspension d'origine végétale subséquente (S).

2. Procédé selon la revendication 1, comprenant le refroidissement (122) de la partie évaporée (EP) avec un refroidisseur (22), avant la filtration (126) de la partie évaporée (EP).

3. Procédé selon l'une quelconque des revendications précédentes, comprenant le tamponnage (130) de la partie évaporée (EP) dans un réservoir (26), avant la préparation (144) de la suspension d'origine végétale subséquente (S).

4. Procédé selon l'une quelconque des revendications précédentes, comprenant le chauffage (134) de la partie évaporée (EP) avec un dispositif de chauffage (30), avant la préparation (144) de la suspension d'origine végétale subséquente (S).

5. Procédé selon l'une quelconque des revendications précédentes, dans lequel le mélange dans les étapes i) et v) est effectué dans le même mélangeur (6).

6. Procédé selon l'une quelconque des revendications précédentes, comprenant la mesure (140) de la température de la partie évaporée (EP) ou de la température d'un mélange (EP-W') dont la partie évaporée (EP) fait partie, avant la préparation (144) de la suspension d'origine végétale subséquente (S).

7. Procédé selon l'une quelconque des revendications précédentes, comprenant la mesure (142) de la quantité de la partie évaporée (EP), avant la préparation (144) de la suspension d'origine végétale subséquente (S).

8. Procédé selon l'une quelconque des revendications précédentes, dans lequel la préparation (144) de la suspension d'origine végétale subséquente (S) comprend l'alimentation (146) d'eau (W) et le mélange de l'eau fournie (W) avec la matière végétale (P) et la partie évaporée (EP).

9. Procédé selon l'une quelconque des revendications précédentes, dans lequel la suspension d'origine végétale subséquente (S) comprend une quantité d'eau dont au moins 75 % provient de la partie évaporée (EP).

10. Procédé selon l'une quelconque des revendications précédentes, dans lequel la partie évaporée (EP) a une température initiale d'au moins 80 °C, et la préparation (144) de la suspension d'origine végétale subséquente (S) est réalisée avant que l'énergie thermique de la partie évaporée (EP) a été réduite d'une quantité qui correspond à une diminution de température supérieure à 30 °C.

11. Procédé selon l'une quelconque des revendications précédentes, dans lequel le procédé (100) est un procédé continu qui est répété en continu pendant une période de temps.

12. Système (1) de production d'un produit alimentaire liquide concentré d'origine végétale (FP), le système comprenant

i) un mélangeur (6) configuré pour préparer une suspension d'origine végétale (S) par mélange d'au moins une matière végétale (P) et d'eau (W) ;

ii) un récipient (10) permettant de traiter la suspension (S) par au moins l'une des enzymes (E) et de la chaleur ;

iii) une unité de séparation (12) configurée pour séparer la suspension (S) en une partie solide (SP) et une partie liquide (LP) ;

iv) un évaporateur (18) configuré pour évaporer de l'eau de la partie liquide (LP), pour produire au moins une partie évaporée (EP) qui comprend de l'eau évaporée, et au moins une partie concentrée (CP) qui forme le produit alimentaire liquide concentré d'origine végétale (FP) ;

v) un conduit de retour (20) configuré pour acheminer la partie évaporée (EP) depuis l'évaporateur (18) vers le mélangeur (6) ou vers un autre mélangeur (6') configuré pour préparer une suspension d'origine végétale subséquente (S) par mélange d'au moins une matière végétale (P) et la partie évaporée (EP) ;

**caractérisé par**

(vi) un filtre (24) pour filtrer la partie évaporée (EP), avant la préparation (144) de la suspension d'origine végétale subséquente (S).

13. Système selon la revendication 12, dans lequel le conduit de retour (20) comprend un capteur de température (34) configuré pour mesurer une température de la partie évaporée (EP) ou la température d'un mélange (EP-W') dont fait partie la partie évaporée (EP).

14. Système selon la revendication 12 ou 13, dans lequel le conduit de retour (20) comprend un compteur (32) configuré pour mesurer la quantité de la partie évaporée (EP) ou mesurer la quantité d'un mélange (EP-W') dont fait partie la partie évaporée (EP).

EP 4 344 554 B1

Fig. 1

13

100

**102**: Preparing plant-based slurry (S) by mixing plant material (P) and water (W)

**106**: Treating S with enzymes (E)

**110**: Separating S into solid portion (SP) and liquid portion (LP)

**116**: Evaporating water from LP to produce evaporated portion (EP) and concentrated portion (CP)

**122**: Cooling EP

**126**: Filtering EP

**130**: Buffering EP

**134**: Heating EP

**140**: Measuring temperature of EP

**142**: Measuring amount of EP

**144**: Preparing subsequent plant-based slurry (S) by mixing plant material (P) and EP

**146**: Supply water (W)

150

# Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 112314815 A

- US 2015136333 A1